# EUROPEAN PATENT APPLICATION

(11) **EP 1 154 664 A1**
(43) Date of publication of application: **14.11.2001**
(21) Application number: 00303898.1
(22) Date of filing: 09.05.2000
(51) Int. Cl.: H04Q 7/38

(54) **Resource reservation in 3G or future generation telecommunication network II**

(71) Applicant: LUCENT TECHNOLOGIES INC., Murray Hill, New Jersey 07974-0636 (US)
(72) Inventor: Chen, Xiaobao X., Swindon Wiltshire SN5 5DQ (GB)
(74) Representative: Williams, David John

(57) **Abstract**

In the UMTS, resource reservation is provided by using RSVP as a generic QoS signaling protocol and to activate PDP Context. The RSVP messages are filtered at either the GGSN 24 or the SGSN 26.

## Description

This invention relates to telecommunications networks operating the Internet Protocol (IP), and relates especially to a method of reserving resources.

In third generation (3G) telecommunications networks, such as Universal Mobile Telecommunication System (UMTS), broad bandwidth is provided for services such as data and multimedia in addition to voice. An obvious need is that required Quality of Service (QoS) should be provided to users, but in IP networks, if contention for resources is not resolved, then QoS cannot be guaranteed.

In IP networks or the Internet in general, Resource reSerVation Protocol (RSVP) is used to allow the network to reserve resources so as to provide QoS. RSVP can be used for QoS control locally or it may be used across IP networks.

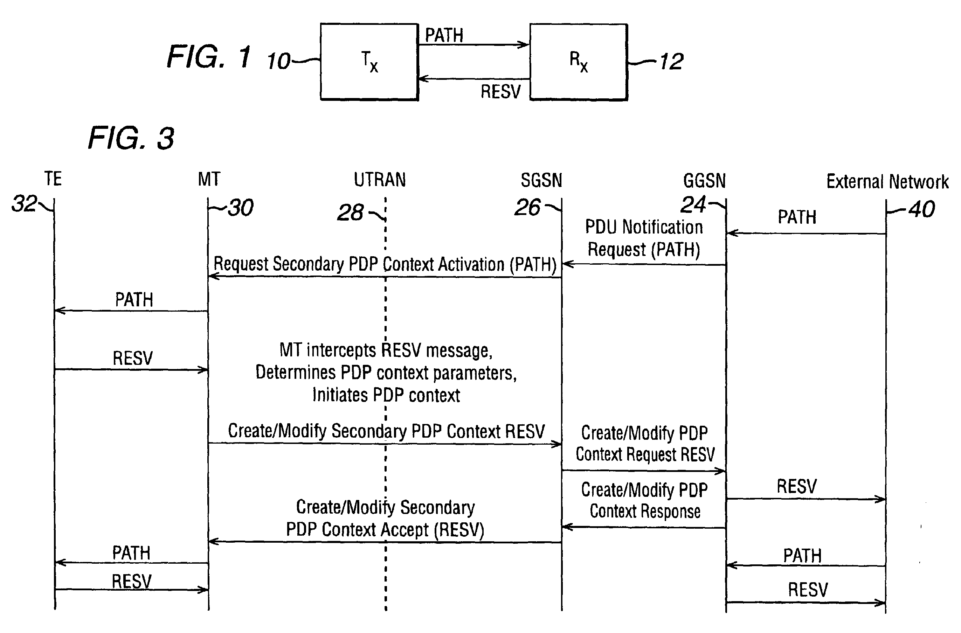

RSVP is an end-to-end protocol and is illustrated in Figure 1. A transmitting user 10 sends to a receiving user 12 a message PATH. The PATH message carries the traffic characteristics information such as Tspecs to indicate the traffic behavior that is to be sent from the user 10. When the receiving user receives the PATH message, it sends a RESV message which contains QoS requests such as FlowSpecs. In practice, the transmitting and receiving users 10, 12 can be located remotely so that PATH and RESV messages pass through several nodes in UMTS. As each node receives either of the messages, it makes a decision as to whether adequate resources in that node can be reserved. If this is possible, then the messages are relayed to the next hop for the PATH message and to the previous hop for the RESV message. When the RESV message reaches the transmitting user 10, it begins to transmit data.

Periodic refresh messages are sent subsequently to maintain the QoS status at each node in which it has been set up.

A basic requirement for the use of RSVP in GPRS/UMTS is that is should not replace the existing signaling protocols such as the PDP (Packet Data Protocol) Context Activation/Modification/Deletion procedure, but should interact with it.

Previous proposals for use of RSVP as a generic QoS signaling mechanism have had the drawback of requiring an additional RSVP signaling element attached either to the GGSN or the SGSN to intercept the RSVP messages and to activate PDP Context Activation Procedure, so that additional interfaces and/or protocols have been required, resulting in greater sustem complexity, and increased implementation and network management costs. A further disadvantage is that the application has then to be modified so as to be aware of the RSVP signaling element, and therefore must be GPRS/UMTS aware, which limits the scope of the application and renders it non-generic.

In a copending patent application filed on ? March 2000 and at the TSG-SA Working Group meeting no. 12 in Tokyo, 6-9 March 2000, applicant dislosed the concept of transparent transport of RSVP by a technique referred to as "piggybacking"; in the technique, at least the data object content of a QoS request is RSVP messages are piggybacked in PDP context messages, and the piggybacked messages are filtered at the Mobile Terminal and at the Gateway GPRS Node

It is an object of the invention to provide an alternative method of reserving resources in third or future generations of wireless mobile networks such as UMTS which has no or minimal impact on existing architecture or QoS procedures,that minimizes any extra signaling traffic associated with supporting the method, and that allows a suitable existing protocol to be used.

According to the invention, in a third or future generation telecommunication network, a method of allocating resources for user traffic passing between a mobile terminal and a remote user, characterized in that the mobile terminal and/or a support node of the network is arranged to filter each packet, to determine if a packet contains any Quality of Service request and, if so, to process that request.

In the accompanying drawings, Figure 1 illustrates the operation of RSVP. The invention will be described by way of example only, with reference to figures 2, 3 and 4 in which:-
Figure 2 illustrates schematically the UMTS QoS architecture for the control plane;
Figure 3 illustrates the interchange of messages according to a first embodiment of the invention in an uplink with filtering at a GGSN; and

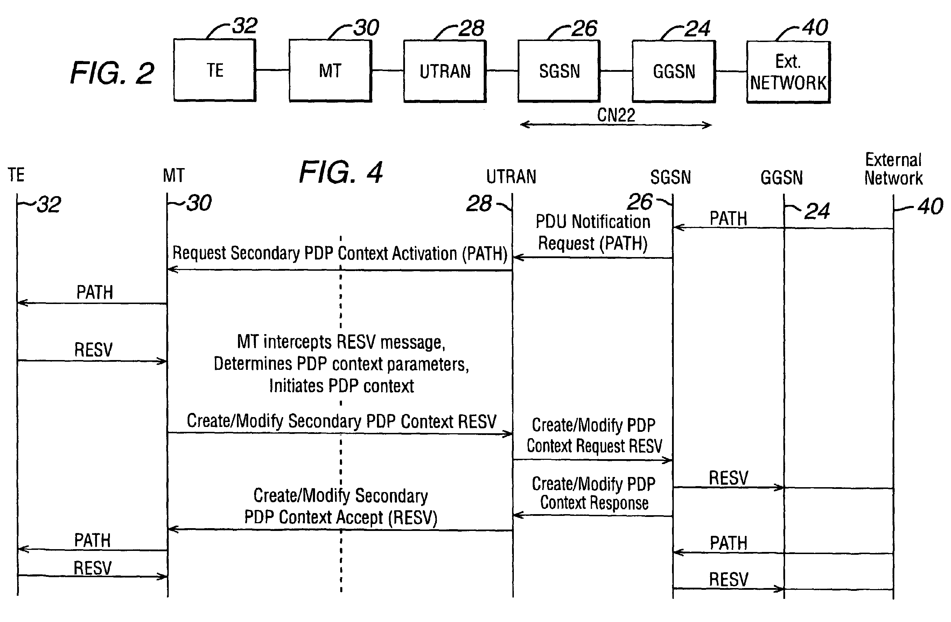

Figure 4 illustrates a variation of Figure 3 in an uplink with filtering at a SGSN In Figure 2 the UMTS 20 comprises a Core Network (CN) 22 formed by a Gateway GPRS Support Node (GGSN) 24 and a Serving GPRS Support Node (SGSN) 26; there is also a UMTS Terrestrial Radio Access Network (UTRAN) 28. A MT 30 communicates with the UTRAN 28 across a radio interface. The MT 30 is connected to Terminal Equipment (TE) 32 which may run non-UMTS specific applications. The MT 30 is UMTS specific, and is capable of processing the traffic from the TE 32 to channel it appropriately to the UMTS, usually to the radio access network.

The GGSN 24 communicates with an External Network 40.

The UMTS 20 operates the application-specific Packet Data Protocol (PDP) context as usual to negotiate the QoS and activate the QoS control between the MT 30 and UMTS network 20.

In the Figure 3 arrangement, both the MT 30 and the GGSN 24 filter each incoming packet to check it for any QoS content; if such a content is present, the MT or GGSN processes the request by interacting with the RSVP-processing entities using the RSVP protocol procedure. If there is no QoS content the packet is relayed to the next hop.

When a packet arrives at the GGSN 24 from the External Network 40, the GGSN checks the protocol ID of the IP packet. If the protocol ID indicates that it carries an RSVP message (protocol ID = 46), then the GGSN will start activating the network initiated PDP contextset up, ie the GGSN extracts the QoS (eg Tspecs of IntServ) in the RSVP message, and applies it to the traffic characterisation. After the PDP context activation is set up, the GGSN will relay the received RSVP message to the intended remote end, which will respond to the message according to its existing resource availability and/or application requirements. On receipt of a RESV message, the GGSN extracts the QoS specs such as FlowSpecs if IntServ, and applies the QoS requirements.

Figure 3 shows a situation for the QoS control in the downlink direction where no corresponding PDP context exists when the PATH message from the external network is received at the GGSN 24. The GGSN sends a PDU (Protocol Data Unit) notification request message to the SGSN 26. The SGSN 26 sends a request secondary PDP context activation message to the MT. The MT 30 extracts the PATH message and send it to the TE 32, which replies with a RESV message, which the MT intercepts; the MT determines the PDP context parameters and initiates PDP context. Either an existing secondary PDP context is modified or a new secondary PDP context is created by the MT, and sent over the UTRAN 28 to the SGSN. The SGSN creates or modifies a PDP context request and passes it to the GGSN 24, which extracts the RESV message and passes it to the External Network 40.

In subsequent communications, The GGSN 24 sends a create/modify PDP Context response message to the SGSN which sends a create/modify secondary PDP context response message across the UTRAN to the MT 30.

In this arrangement, there is no RSVP signaling interaction between the SGSN 26 and the GGSN 24. This simplifies the interfaces and reduces signaling traffic between the SGSN and the GGSN. Moreover, the RSVP can be directly translated by the GGSN into other QoS/call set-up signaling to facilitate fast interworking between the GPRS/UMTS and the External Network 40.

The RSVP message can also be filtered at the SGSN as shown in Figure 4. The message exchanges are similar to those in Figure 3.

When the message is filtered at the SGSN 26, when the SGSN receives and recognizes an RSVP message, it notifies the GGSN to activate network initiated PDP context activation procedure to set up the UMTS specific session (including the associated QoS context).

This arrangement allows fast intra-GGSN handoff when the mobile only roams between different SGSNs without changing its GGSN. In this way, the processing and RSVP signaling traffic is limited within the SGSNs with which the mobile is associated; this is achieved without increasing the traffic load or the control complexity at the GGSN serving as the gateway. Such a gateway is usually traffic-intensive and handles different signaling and traffic interworking functions between the UMTS and the external network 40.

The MT 30 and the SGSN 26 or GGSN 24 are also required to check if the received RSVP messages are a) sent/received for the first time, so as to initiate PDP Context set-up if appropriate; b) modified, in order to initiate PDP Context Modification procedure if appropriate; or c) merely refresh messages to trigger local generation of responses.
As an alternative to direct use of RSVP messages, the techniques of "piggybacking" at least the data object content of a QoS request, as set out in applicants copending patent application filed on 3 March 2000 as Application No. 00301782.9, may be applied. The filtering at the MT and the GGSN or SGSN will occur as before.

## Claims

1. In a third or future generation telecommunication network, a method of allocating resources for user traffic passing between a mobile terminal (30) and a remote user **characterized in that** the mobile terminal and/or a support node of the network is arranged to filter each packet, to determine if a packet contains any Quality of Service request and, if so, to process that request

2. A method according to Claim 1 in which the Quality of Service request is in the form of Resource reSerVation Protocol, the mobile terminal or support node being arranged to activate Packet Data Protocol context, whereby the Resource reSerVation Protocol acts as a generic Quality of Service signaling protocol .

3. A method according to Claim 1 or Claim 2 in which the support node is a Gateway GPRS Support Node (24).

4. A method according to Claim 3 in which the Gateway GPRS Support Node (24) is arranged to transmit a PDP notification request or a create/modify PDP context request to a Serving GPRS Support Node (26), which is arranged to send a request secondary PDP context activation or a create/modify PDP Context request message to the mobile terminal (30)

5. A method according to Claim 1 or Claim 2 in which the support node is a Serving GRRS Support Node (26).

6. A method according to Claim 5 in which the Serving GPRS Support Node (26) is arranged to send a request secondary PDP Context activation or a create/modify PDP context activation request message to the mobile terminal (30).

7. A method according to any preceding Claim in which at least the data objects content of a Quality of Service request is sent transparently between the support node and the mobile terminal
